# EUROPÄISCHE PATENTSCHRIFT

(11) **EP 2 124 119 B1**
(45) Veröffentlichungstag und Bekanntmachung des Hinweises auf die Patenterteilung: **22.09.2010**
(21) Anmeldenummer: 08156490.8
(22) Anmeldetag: 19.05.2008
(51) Int. Cl.: G05B 19/418, G06Q 30/00

(54) **System und Verfahren zur Aggregation und Übermittlung von Prozessmetadaten heterogener Herstellungsprozessketten**
System and method for collating and transferring process metadata of heterogeneous production process chains
Système et procédé d'agrégation et de transmission de métadonnées de processus de chaînes de processus de fabrication hétérogènes

(43) Veröffentlichungstag der Anmeldung: 25.11.2009
(73) Patentinhaber: Swiss Reinsurance Company, 8022 Zurich (CH)
(72) Erfinder: Schlenther, Christina, 5200, Brugg AG (CH); Spühler, Markus, 8306, Brüttisellen (CH)
(74) Vertreter: Braun, André jr.

(56) Entgegenhaltungen:
- WO-A-2004/034204
- US-A- 6 151 601
- US-A1- 2003 195 934
- US-A1- 2003 198 188
- US-A1- 2007 214 020

## Beschreibung

Die vorliegende Erfindung betrifft ein System und Verfahren zur Aggregation und Übermittlung von Prozessmetadaten heterogener Herstellungsprozeßketten, wobei jede Prozesskette eine Vielzahl von im Herstellungsprozeß eines Herstellungsproduktes mitwirkenden Prozeßvorrichtungen umfasst. Mittels des Systems werden herstellungsprozessketten-spezifische Betriebsdaten einer selektierten Herstellungsprozeßkette erfasst und standardisierte Prozessmetadaten generiert und auf eine Kommunikationsvorrichtung eines Benutzers übermittelt. Insbesondere betrifft die Erfindung den standardisierten Zugriff auf Herstellungsprozessdaten unterschiedlichster heterogener Herstellungsprozeßketten mit unterschiedlichsten Herstellungsvorrichtungen und Erfassungssensoriken.

### Stand der Technik

Zur Steuerung und Überwachung von Systemen werden weltweit immer mehr Computer- und Kommunikationssysteme dazu gebraucht, Betriebsdaten von Prozessen oder Prozessketten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network) oder einem Mobilfunknetz (PLMN: Public Land Mobile Network) wie z.B. GSM- (Global System for Mobile communication) oder UMTS-Netzen (Universal Mobile Telephone System) etc. zu beziehen oder zu übermitteln. Insbesondere werden dabei Betriebsdaten dargestellt und/oder bearbeitet und/oder anderen Computersystemen modifiziert zur Verfügung gestellt. Unter Betriebsdaten fallen u.a. digitale Daten wie Texte, Graphiken, Bilder, Animationen, Video, Quicktime und Tonaufnahmen. Dazu gehören auch MPx (MP3) oder MPEGx (MPEG7) Standards, wie sie durch die Moving Picture Experts Group definiert werden. Nicht nur die überwachten Prozessketten sind dabei in den meisten Fällen heterogen in ihrer Zusammensetzung, sondern auch in den darüber verfügbaren Betriebsdaten und Betriebdatenformaten. Bei einer einheitlichen Überwachung und/oder Analyse stellen somit die unterschiedlichsten Datenformate und Dateninformationsinhalte (insbesondere Datenlücken)einen kaum zu überwindbare Schwelle. Die Formate und Betriebsdateninhalte reichen von maschinen- und sensorikspezifischen Definitionen bis zu Daten und Datenformate Dritter wie z.B. NatCat, LAH, PCS, RLC, ACORD (Association for Cooperative Operation Research) etc. Damit ist eine lückenlose Analyse heterogener Herstellungsprozessketten zum heutigen Zeitpunkt praktisch unmöglich oder nur mit ungeheurem Zeitaufwand unter menschlicher Interaktion möglich. Die Probleme bei standardisierter, prozessketten-Oberschrcitender Datenerfassung und Generierung sind herstellungsintern aber vor allem bei Prozesskettenübergreifendem Zugriff Dritter bekannt. Insbesondere ist Probleme bei der Erfassung und Wandlung von Daten in standardisierte Formate bekannt. Die Patentschrift US 2007/0214020 A1 zeigt ein Verfahren, mittels welchem heterogene Betriebsdaten durch Dritte in standardisierten Formaten erfasst und gespeichert werden können. Dabei werden Klassen (oder Gruppen) definiert und in den Standardformaten verwendet. Ebenfalls ist das Problem bekannt, eine Wertekette (value chain) bzw. die Werteketteanalyse zu automatisieren und standardisieren. Die Patentschrift US 2007/0043662 A1 zeigt ein solches Verfahren zur Automatisierung der Value Chain. Dabei werden entsprechende Gruppen oder Klassen gebildet, Wahrscheinlichkeitsverteilungen zugewiesen und entsprechende Formate generiert. Die Patentschrift JP 2007011758 zeigt ein Verfahren und System, mittels welchem heterogene Daten aufbereitet und in standardisierter Form Clients zur Verfügung gestellt werden können. Speicherformat und Inputformat müssen dabei nicht identisch sein. Das System ist jedoch statisch konfiguriert und muss für Fallgruppen jeweils angepasst werden. Die Patentschrift UA 22174 U zeigt ein weiteres Verfahren und System, bei welchem externe Clients auf Daten eines zentralen Servers standardisiert zugreifen können. Bei dieser Gruppe von Dokumenten des Standes der Technik stehen jedoch vor allem Zugriffsberechtigungen und Sicherheitsstandards beim Zugriff und der Übertragung im Vordergrund. Die automatisierte und standardisierte Datenerfassung ist weitgehend bekannt. Dazu gibt es die unterschiedlichsten Dokumente und Lösungsansätze im Stand der Technik. Als Beispiel einer solchen Patentschrift sei hier WO 0215082 A1 erwähnt, die ein solches System zeigt. Dabei werden auch Standardabläufe betreffend Sicherheit und Datenübertragung (Datenformate) für Dienstleister auf diesem Gebiet offenbart. Eine weitere solche Patentschrift kann auch z.B. mit EP 1313043 A1 gefunden werden. Dabei werden auch Probleme wie die Bearbeitung fehlender oder unvollständiger Daten nach der Erfassung von heterogenen Fällen diskutiert. Schlussendlich soll auf Stand der Technik hingewiesen werden, wie er z.B. aus DE 102005019434 A1 bekannt ist. Auch in diesem Dokument werden Probleme und Lösungen diskutiert bei der Erfassung relevanter Daten und Ergänzung unvollständiger oder fehlender Daten.

Ebenfalls im Stand der Technik findet sich die Patentschrift US 2003/0198188. US 2003/0198188 zeigt ein System zum Überwachen von Remote-Einheiten und Prozessen mittels eines lokal angebrachten Controllers, der Daten erfasst und periodisch an eine Zentraleinheit übermittelt, von wo sie von einer beliebigen autorisierten Endbenutzer-Computer abgerufen werden kann. Konfigurationsdaten können als zusätzliche Ausführungsvariante von den Endbenutzer-Computer an die Remote-Einheiten geleitet werden. US 6151601 zeigt weiter ein System, mittels welchem Daten auf Benutzerrequest im Internet gesammelt werden können. Die gesammelten Daten werden mittels eines Mapping-Systems transformiert und für den Zugriff von Web-Applikationen auf Personal Computer aufbereitet. Das vorgestellte System ist darauf fokussiert, auch Daten aus gemischten Datenformaten, wie Text, Bilder, Videos, Voice, Sound etc. einheitlich zu erfassen und miteinander vergleichen zu können. Konventionelle Search Engine zeigten hingegen bei gemischten Quellen Schwierigkeiten beim Vergleich. WO 2004/034204 zeigt ein System zur Überwachung von Industrieprozessen. Mittels eines Remote Service Portals werden Daten von der Herstellungskette gesammelt, identifiziert und über ein Netzwerk an eine Überwachungsstation übermittelt. Die Überwachungsstation analysiert die übermittelten Daten und bereitet sie zur Überwachung auf. Das System ist anstelle von fehlertoleranten Systemen bei der Analyse der Daten darauf fokussiert, mögliche Betriebsschäden pro-aktiv zu erkennen und voraussagen zu können und entsprechende Warnungen frühzeitig zur Fehlerbehebung ausgeben zu können. US 2003/0195934 zeigt einen web-basierten Informations-Server, auf welchen mittels einer Vielzahl von unterschiedlichen Web-Diensten zugegriffen werden kann. Der web-basierte Information-Server dient dabei als Verbindungsstation zwischen den Web-Diensten, wobei ein Web-Dienst Daten eines anderen Web-Dienstes mittels Request beim Information-Server verlangt. US 2007/0214020 schliesslich zeigt die Generierung einer Datenstruktur für eine Vielzahl von unterschiedlichen Versicherungsprodukten. Dabei wird für jedes zusätzliche Versicherungsprodukt ein produktespezifisches zusätzliches Datenelement generiert, so dass die unterschiedlichen Versicherungsprodukte mittels einer einheitlichen Datenstruktur verwaltet werden können.

### Technische Aufgabe

Es ist eine Aufgabe der vorliegenden Erfindung, ein neues und besseres Verfahren vorzuschlagen, das die obenerwähnten Nachteile des Standes der Technik nicht aufweist. Insbesondere sollen Prozessmetadaten heterogener Herstellungsprozeßketten standardisiert aggregiert und übermittelt werden können, unabhängig von den unterschiedlichen in jeder Prozesskette eines Herstellungsproduktes mitwirkenden Prozeßvorrichtungen und entsprechenden Standards. Damit sollen mittels des Systems herstellungsprozessketten-spezifische Betriebsdaten jeder Art von selektierten Herstellungsprozessketten erfasst und entsprechende Prozessmetadaten automatisch generiert werden können. Das System soll einen automatisch standardisierten Zugriff auf Herstellungsprozessdaten unterschiedlichster Herstellungsprozeßketten aber auch in umgekehrter Weise eine benutzerspezifische Anpassung der Prozessmetadaten ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen, der Beschreibung und Zeichnung hervor.

Insbesondere werden diese Ziele durch die Erfindung dadurch erreicht, dass zur Aggregation und Übermittlung von Prozessmetadaten heterogener Herstellungsprozeßketten jede Prozesskette eine Vielzahl von im Herstellungsprozeß eines Herstellungsproduktes mitwirkenden Prozeßvorrichtungen umfasst, wobei herstellungsprozessketten-spezifische Betriebsdaten einer selektierten Herstellungsprozeßkette auf einem Benutzerrequest einer Kommunikationsvorrichtung erfasst und Prozessmetadaten auf eine Kommunikationsvorrichtung eines Benutzers übermittelt werden, dass mittels dezentralisiert bei den Herstellungsprozessketten angeordneten Aggregationsmodulen einer Zentraleinheit auf die Prozessvorrichtungen einer selektierten Herstellungsprozeßkette zugegriffen wird, wobei für den Zugriff mittels der Zentraleinheit ein Metadatenprofil basierend auf dem Benutzerrequest mindestens teilweise dynamisch generiert wird, welche dynamisch generierten Teile des Metadatenprofil standardisierte Steuersignaldaten für die Zugriffe des Aggregationsmoduls auf die Herstellungsprozesskette umfassen, dass mittels eines ersten Signalisierungskanals Authentisierungsdaten des Metadatenprofils eines Herstellungsprodukt von der Zentraleinheit auf ein Aggregationsmodul übertragen werden, wobei mittels des Aggregationsmoduls das entsprechende Herstellungsprodukt in der Herstellungsprozeßkette lokalisiert und authentisiert wird, dass mittels eines zweiten Signalisierungskanals die dynamisch generierten Steuersignaldaten des Metadatenprofils von der Zentraleinheit auf das Aggregationsmodul übertragen werden, wobei basierend auf den Steuersignaldaten mittels des Aggregationsmodul auf die Herstellungsprozesskette zugegriffen wird und herstellungsprozessketten-spezifische Betriebsdaten des Herstellungsproduktes erfasst werden, und dass die erfassten Betriebsdaten vom Aggregationsmodul auf die Zentraleinheit übertragen werden, wobei mittels der Zentraleinheit entsprechende Prozessmetadaten mindestens teilweise durch automatische Analyse der Betriebsdaten erzeugt werden und auf die Kommunikationsvorrichtung übermittelt werden. Das selektierte Herstellungsprodukt kann z.B. vom Benutzer im mittels der Kommunikationsvorrichtung generierten Benutzerrequest bestimmt werden. Der dynamisch bestimmle Teil des Metadatenprofils mit den Steuersignaldaten kann z.B. Programme und/oder programmbegleitende Daten umfassen. Die Herstellungsprozesskette kann z.B. eine sog. Value Chain sein: Bei der Herstellung von Produkten kann sie sowohl Vorrichtungen in einer Verarbeitungslinie oder-strasse umfassen, aber auch andere automatisierte Vorrichtungen in der Wertschöpfungskette. Im Spezialfall von teilweise Geldwertbasierten Systemen, bei welchen das Herstellungsprodukt häufig einem abzuwickelnden Fall entspricht, kann die Herstellungsprozesskette auch eine sog. Transactional Chain umfassen. Die Betriebsdaten können z.B. Multimediadaten und/oder Verweise auf Multimediadaten umfassen. Der Vorteil dieser Erfindung liegt insbesondere darin, dass eine Optimierung der Generierung und Übertragung von Betriebsdaten bzw. entsprechenden Metadaten erreicht wird, ohne dass die bestehenden Herstellungsprozessketten angepasst oder ausgebaut werden müssen. Dies hat den Vorteil, dass die Erfindung kostengünstiger und schneller eine Verbesserung bringt, ohne dass der Benutzer bezüglich der Qualität oder Quantität der übermittelten Informationen eine Einschränkung erfahren würde. Anderseits ist es gar so, dass bei den heutigen Herstellungsstrukturen eine derartige Anpassung in vielen Bereichen technischen, finanziellen Gründen oder wegen der Wahrung von Geschäftsgeheimnissen gar nicht möglich ist. Im Stand der Technik können Metadaten deshalb in den meisten Bereichen basierend auf der Verfügbarkeit und Zugreifbarkeit nur lückenhaft oder gar fehlerhaft standardisiert generiert werden. Ein anderer Vorteil ist, dass dem Benutzer das zeitaufwendige Suchen und zusammenstellen von Betriebsdaten, insbesondere in heterogenen Herstellungsprozessketten und darin verfügbaren heterogenen Interface- und Formatmöglichkeiten, in grossen Netzwerken stark erleichtert wird und er zudem eine dynamische vom System erstellte Selektion oder Zusammenstellung (d.h. er erhält z.B. vom System aktiv Vorschläge für Aktionen) und eine von ihm direkt beeinflussbare Automation bei der Erfassung erhalten kann. Ein anderer Vorteil dieser Ausführungsvariante liegt darin, dass die Metadaten, d.h. die Prozessmetadaten, fortwährend die für den Benutzer notwendige Aktualität aufweisen. Dies wird zudem ohne unnötigen Verschleiss von Systemressourcen erreicht.

In einer Ausführungsvariante werden die Herstellungsprodukte einer Herstellungsprozeßkette mittels des zugeordneten Aggregationsmoduls automatisch mit einem elektronischen Authentisierungslabel versehen. Diese Ausführungsvariante hat u.a. den Vorteil, dass Lokalisierung und Authentisierung eines Herstellungsproduktes basierend auf dem Authentisierungslabel in der Herstellungsprozesskette direkt und einfach möglich ist, insbesondere ohne dass der Benutzer oder das System erst bei Benutzerrequest aktiv werden müssen.

In einer anderen Ausführungsvariante wird der dynamische Teil des Metadatenprofil für den Durchgang eines Herstellungsproduktes in der Herstellungsprozeßkette mittels der Zentraleinheit automatisch bestimmt. Diese Ausführungsvariante hat u.a. den Vorteil, dass der Benutzer im Benutzerrequest nur allgemeine Authentifikationsdaten oder Formatanweisungen geben muss, ohne die geringste Kenntnis der unterschiedlichen heterogenen Herstellungsprozessketten, auf welche zugegriffen wird.

In einer weiteren Ausführungsvariante umfasst die Zentraleinheit eine Lookup-Table mit standardisiert abgespeicherten Steuersignaldaten, wobei der dynamische Teil des Metadatenprofils basierend auf den in der Lookup-Table abgespeicherten Steuersignaldaten generiert wird. Diese Ausführungsvariante hat u.a. den Vorteil, dass der Benutzer einfach z.B. über eine geeignete Schnittstelle z.B. in Kombination mit einem Graphical User Interface (GUI) der Kommunikationsvorrichtung auf vorgegeben Steuersignaldaten oder Steuersignalbefehle des Metadatenprofils zugreifen bzw. solche selektieren kann. Damit kann der Benutzer einfach die dynamische Generierung der Steuersignaldaten mittels des Metadatenprofils beeinflussen.

In einer wieder anderen Ausführungsvariante werden aus den einem Herstellungsprodukt zugeordneten Prozessmetadaten mittels eines Repackagingmoduls unter Berücksichtigung der Daten eines Benutzerprofils die Prozessmetadaten contentorientiert und benutzerspezifisch optimiert erzeugt, welchen contentorientierte und benutzerspezifisch optimierte Prozessmetadaten von der Zentraleinheit an die Kommunikationsvorrichtung des Benutzers übermittelt werden. Diese Ausführungsvariante hat u.a. den Vorteil, dass ausgehend von den standardisierten Prozessmetadaten jegliche gewünschte benutzerspezifische Form der Prozessmetadaten automatisiert generiert werden kann und auf die entsprechende Kommunikationsvorrichtung übermittelt werden kann. Insbesondere ist dies sinnvoll sein für Ausführungsvarianten, wo der Benutzer mehrere Benutzerprofile für verschiedene Kommunikationsvorrichtungen definieren kann. Ein weiterer Vorteil dieser Ausführungsvariante ist, dass der Benutzer damit mehrere ganz unterschiedliche Kommunikationsgeräte zentral verwalten kann, ohne jedes Mai Anpassungen an die ebenfalls heterogenen Strukturen der Herstellungsprozessketten vornehmen zu müssen. Somit kann er z.B. über eine komfortable Schnittstelle in der Zentraleinheit die bereitzustellenden Metadaten einer für eine andere weitere Kommunikationsvorrichtung bestimmen und verwalten.

In einer Ausführungsvariante werden die Prozessmetadaten und/oder Verweise auf Prozessmetadaten dem Benutzer in einem Datenspeicher eines Contentmoduls der Zentraleinheit abgespeichert zur Verfügung gestellt. Die Ausführungsvariante hat u.a. den Vorteil, dass einmal generierte Metadaten bei mehrfachem Gebrauch durch den Benutzer nicht jedes Mal neu erzeugt werden müssen. Dies erlaubt einen schnelleren Zugriff auf die gewünschten Daten unter Einsparung von Rechenleistung. Insbesondere wird das Suchen nach Betriebsdaten oder generierten prozessmetadaten erweitert.

In einer anderen Ausführungsvariante verwaltet der Benutzer die im dem Benutzer zugeordneten Datenspeicher des Contentmoduls abgespeicherten Daten mindestens teilweise selber. Unter Verwalten ist z.B. neben dem direkten Zugriff das Löschen oder Verändern von Speicherparameter gemeint. Dies hat u.a. den Vorteil, dass der Benutzer das Speichern der Daten im Contentmodul direkt mitbeeinflussen kann.

In einer weiteren Ausführungsvariante werden mittels eines dritten Signalisierungskanals standardisiert und unabhängig vom Benutzerrequest generierte Daten des Metadatenprofils von der Zentraleinheit auf das Aggregationsmodul übertragen, wobei basierend auf den standardisiert generierten Daten Eigenschaftsparameter von Gruppen von Herstellungsprodukten und/oder Prozeßvorrichtungen auf das Aggregationsmodul übertragen werden.

In einer wieder anderen Ausführungsvariante umfasst das Benutzerprofil benutzerspezifische Daten zu Netzwerkeigenschaften und/oder Daten zu Hardwareeigenschaften der Kommunikationsvorrichtung des Benutzers und/oder Daten zum Benutzerverhalten. Diese Ausführungsvariante hat u.a. die gleichen Vorteile wie die vorhergehenden Ausführungsvarianten, insbesondere erlaubt es eine Netzwerkoptimierte Übermittlung der Prozessmetadaten von der Zentraleinheit auf die Kommunikationsvorrichtung des Benutzers. Ebenso kann z.B. das Repackagingmodul die selektierten Multimediadaten unter Berücksichtigung der Benutzerdaten benutzerspezifisch derart optimieren, dass sie an die Anforderungen der Kommunikationsvorrichtung des Benutzers und/oder die Kommunikationsverbindung von der Zentraleinheit zu der genannten Kommunikationsvorrichtung angepasst sind.

In einer weiteren Ausführungsvariante umfasst das Benutzerprofil Zugriffsbedingungsdaten, welche einen vom Benutzer und/oder der Zentraleinheit definierbaren Geldbetragswert einer Kreditlimite festlegt, bis zu welcher Kreditlimite ein automatisches Billing der bezogenen, Metadaten stattfindet. Dies hat u.a. den Vorteil, dass bei der Vergütung für den Zugriff auf contentorientierte und benutzerspezifisch optimierte Prozessmetadaten der Benutzer oder die Zentraleinheit frei festlegen kann, welche Art von Verrechnung bis zu welchen Beträgen erfolgen soll. Ebenso kann als Ausführungsvariante die Zentraleinheit automatisch und/oder dynamisch Daten zum Benutzerverhalten erfassen und sie dem Benutzerprofil zugeordnet abspeichern. Dies hat z.B. den Vorteil, dass statistische Erhebungen über Benutzerverhalten zentral ausgeführt werden können und Betriebsdatenanbieter schnell auf verändertes Benutzerverhalten reagieren können. Weiter kann das Benutzerprofil z.B. vom Benutzer und/oder der Zentraleinheit festlegbare Weiterverwendungsbedingungsdaten umfassen, basierend auf welchen Weiterverwendungsbedingungsdaten die Zentraleinheit das Benutzerprofil auswertet und z.B. Dritten zugänglich macht. Diese Ausführungsvariante hat z.B. den Vorteil, dass der Benutzer festlegen kann, bis zu welcher Stufe Daten über sein Benutzerverhalten oder sein Benutzerprofil Dritten zugänglich gemacht werden darf oder für statistische Erhebungen verwendet werden darf. Zum Beispiel kann so der Anbieter ein Bonussystem für solche Benutzer oder Besitzer von Herstellungsprozessketten einführen, welche mehr Informationen weiterverwenden lassen. Der Dienstanbieter oder Operator der Zentraleinheit oder des erfinderischen Systems kann so flexibel auf das Kundenverhalten und Kundenwünsche eingehen.

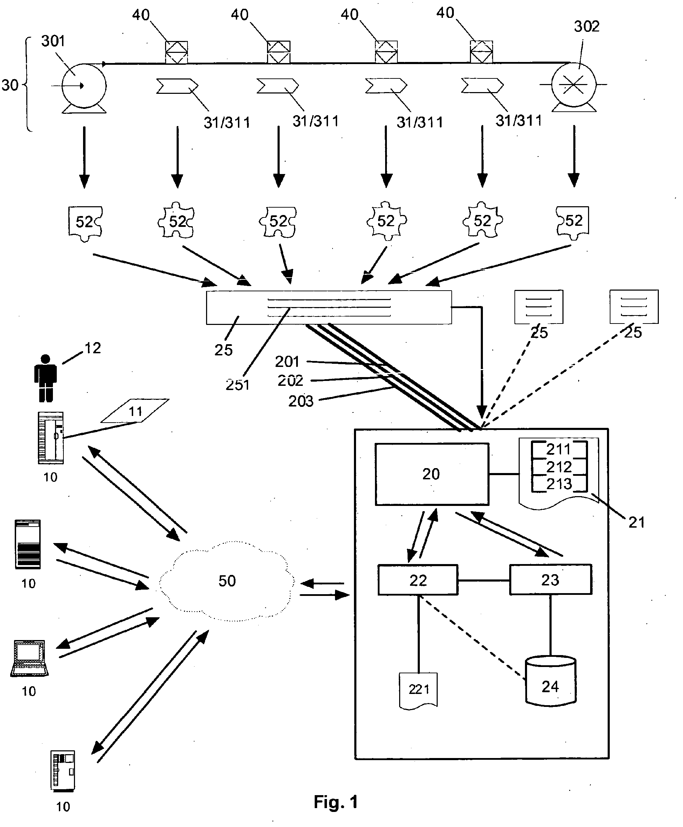

Nachfolgend wird eine Ausführung der vorliegenden Erfindung anhand eines Beispiels beschrieben. Das Beispiel wird durch die beigelegte Figur 1 illustriert, die ein schematisches Blockdiagramm des Verfahrens und des Systems zeigt, in welchem Prozessmetadaten 52 heterogener Herstellungsprozeßketten 30 aggregiert und standardisiert zur Verfügung gestellt bzw. übermittelt werden. Jede Prozesskette 30 umfasst eine Vielzahl von im Herstellungsrpozeß eines Herstellungsproduktes 40 mitwirkenden Prozeßvorrichtungen 31.

Figur 1 illustriert eine Architektur, die zur Realisierung der Erfindung verwendet werden kann. In diesem Ausführungsbeispiel umfasst jede heterogener Herstellungsprozeßkette 30 eine Vielzahl von im Herstellungsprozeß eines Herstellungsproduktes 40 mitwirkenden Prozeßvorrichtungen 31 sowie eine Sensorik 311 zum Erfassen von herstellungsprozessketten-spezifischen Betriebsdaten 52 einer selektierten Herstellungsprozeßkette 30. Eine Herstellungsprozeßkette 30 kann z.B. eine Fabrikationsstrasse oder ähnliches eines herzustellenden Produktes sein. Sie kann aber auch sog. Value Chain bei der Herstellung und/oder Be- oder Verarbeitung eines Produktes sein, welche alle zur Be- oder Verarbeitung und/oder Herstellung relevanten Tätigkeiten oder Herstellungsschritte z.B. mittels der Prozeßvorrichtungen 31 umfasst. Die Prozessmetadaten und/oder die Betriebsdaten 52 einer Herstellungsprozeßkette 30 bzw. der beteiligten Prozeßvorrichtungen 31 und Prozessschritte können also über die Kontrolle und Steuerung der Herstellungsprozeßkette 30 als Analysegrundlage der Herstellungsprozeßkette 30 und/oder der Optimierung der Betriebsparameter der Herstellungsprozeßkette 30 dienen. Bei automatisierten finanzbasierten Verfahren kann die Herstellungsprozeßkette 30 z.B. auch automatisierte oder halbautomatisierte Schritte einer sog. Transactional Chain umfassen mit Verarbeitungsschritten wie automatisierte Übertragung, Bindung, Vergütung, Ereignisdetektion, Ereignisakzept, Ereignisfolgenüberwachung und Beendigung. Die Prozeßvorrichtungen 31 können jede Art von im Herstellungsprozess beteiligten maschinen oder Vorrichtungen aber auch im übertragenen Sinn Be- oder Verarbeitungsschritte umfassen, über welche Daten generiert werden können. Somit könne die Betriebsdaten 52 Daten über jede Art von primären und/oder unterstützenden automatisierten oder halbautomatisierten Aktivitäten einer Value Chain umfassen, insbesondere alle Arten von direkten Aktivitäten wie z.B. automatisierte Montage, maschinelle Bearbeitung, Transport, Betriebsoptimierung etc., indirekten Aktivitäten wie z.B. Energiespeicherung und - Versorgung, Betrieb der Anlagen und/oder Prozessvorrichtungen 31 etc. sowie automatische Qualitätssicherung und -Überwachung wie z.B. Steuerung, Überprüfung der Herstellungsprodukte 40 z.B. mittels entsprechender Sensorik oder Messvorrichtungen und andere automatisierte Tests etc. Die Prozessmetadaten 51 können z.B. zur Übertragung betriebsintern, zwischen unterschiedlichen Netzwerkeinheiten oder für die Übertragung bzw. den Zugriff über ein öffentliches Netzwerk wie dem Internet bestimmt sein.

Mittels des Systems werden den Betriebsdaten 52 zugeordnete Prozessmetadaten 51 generiert und mittels eines Interfacemoduls an eine Kommunikationsvorrichtung 10 eines Benutzers 12 übermittelt. Die Betriebsdaten 52 können z.B. jede Art von Multimediadaten und/oder Verweise auf Multimediadaten umfassen. Gemäss der vorliegenden Erfindung ist die Empfangsvorrichtung 10 mit einer Zentraleinheit 20 über ein Kommunikationsnetz 50 bidirektional verbunden. Das Kommunikationsnetz 50 umfasst beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Unter Betriebsdaten 52 können z.B. jede Art von Multimediadaten fallen u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf andere Betriebsdaten 52 bzw. Multimediadaten. Dazu gehören z.B. auch MPx (MP3) oder MPEGx (MPEG4 oder 7) Standards, wie sie durch die Moving Picture Experts Group definiert werden. Die Betriebsdaten 52 können an unterschiedlichen Orten in unterschiedlichen Netzen oder lokal für die Zentraleinheit 20 mittels der weiter unten beschriebenen, dezentralisiert bei den Herstellungsketten 30 angeordneten Aggregationsmodulen 25 zugreifbar sein. Die letztgenannten Netzwerke können wie das Kommunikationsnetz 50 z.B. ein LAN (Local Area Network) oder ein WAN (Wide Area Network), das Internet, Broadcastkabelnetze, PSTN, PLMN o.ä. umfassen. Die Prozessmetadaten können z.B. auf die unterschiedlichsten Arten, insbesondere unter Verwendung bekannten Indexingtechniken aus den mittels der Aggregationsmodule 25 erfassten Betriebsdaten 52 generiert werden. Im vorliegenden Ausführungsbeispiel können die Prozessmetadaten mindestens teilweise dynamisch (in Real-Time) basierend auf dem Metadatenprofil 21 erzeugt werden. Dies hat z.B. den Vorteil, dass die Prozessmetadaten immer die für den Benutzer 12 sinnvolle Aktualität und Genauigkeit besitzen. Es können insbesondere bei der Suche bestimmter Daten bzw. entsprechenden Sensorik 311 von Prozessvorrichtungen 31 sog. Agents eingesetzt werden.

Das System umfasst dezentralisiert bei den Herstellungsprozessketten 30 angeordnete Aggregationsmodule 25 einer Zentraleinheit 20, wobei mittels der Aggregationsmodule 25 auf die Prozessvorrichtungen 31 und/oder die Sensorik 311 der selektierten Herstellungsprozeßkette 30 zugegriffen wird. Ein Metädatenprofil 21 wird für den Zugriff mittels der Zentraleinheit 20 basierend auf einem Benutzerrequest 11 der Kommunikationsvorrichtung 10 mindestens teilweise dynamisch generiert. Der vom Benutzer 12 mittels der Kommunikationsvorrichtung 10 generierte Benutzerrequest 11 kann z.B. Angaben zur Identifikation und/oder Authentifikation eines bestimmten Herstellungsproduktes 40 umfassen. Die dynamisch generierten Teile des Metadatenprofil 21 umfassen standardisierte Steuersignaldaten 212 für die Zugriffe des Aggregationsmoduls 25 auf die Herstellungsprozesskette 30. Der dynamisch generierte Teil 212 des Metadatenprofil 21 mit den Steuersignaldaten 212 kann z.B. für den Durchgang eines Herstellungsprodukt 40 mittels der Zentraleinheit automatisch oder mindestens teilweise automatisch bestimmt werden. Insbesondere kann der dynamisch bestimmte Teil der Metadatenprofils 52 mit den Steuersignaldaten beispielsweise Programme und/oder programmbegleitende Daten umfassen. Die Zentraleinheit 20 kann z.B. eine Lookup-Table mit standardisiert abgespeicherten Steuersignaldaten 212 umfassen, wobei der dynamische Teil 212 des Metadatenprofils 21 basierend auf den in der Lookup-Table abgespeicherten Steuersignaldaten generiert wird. Der Benutzer 12 kann z.B. über eine geeignete Schnittstelle z.B. in Kombination mit einem Graphical User Interface (GUI) der Kommunikationsvorrichtung 10 auf in der Lookup-Table vordefinierte Steuersignaldaten oder Steuersignalbefehle 212 des Metadatenprofils 21 zugreifen bzw. solche selektieren. Damit kann der Benutzer 12 auf einfachste Weise die dynamische Generierung der Steuersignaldaten 212 mittels des Metadatenprofils 21 beeinflussen.

Mittels eines ersten Signalisierungskanals 201 werden Authentisiorungsdaten 211 eines Herstellungsprodukts 40 von der Zentraleinheit 20 auf das Aggregationsmodul 25 übertragen. Mittels des Aggregationsmoduls 25 wird das entsprechende Herstellungsprodukt 40 in der Herstellungsprozeßkette Authentisierungsdaten 211 lokalisiert und authentisiert. Das Herstellungsprodukt 40 kann z.B. ein mittels des Aggregationsmoduls 25 automatisch zugeordnetes elektronisches oder mittels entsprechender Erfassungsvorrichtungen detektierbares Authentisierungslabel umfassen. Mittels eines zweiten Signalisierungskanals 202 werden die Steuersignaldaten 212 des Metadatenprofils 21 von der Zentraleinheit 20 auf das Aggregationsmodul 25 übertragen. Mittels des Aggregationsmoduls 25 wird dynamisch basierend auf den Steuersignaldaten 212 auf die Herstellungsprozesskette und/oder die Sensorik 311 zugegriffen. Das Aggregationsmodul 25 umfasst entsprechende Sensorikinterfaces 251 zum Zugreifen auf die Sensorik 311.

Die erfassten Betriebsdaten 52 des Herstellungsproduktes 40 werden vom Aggregationsmodul 25 auf die Zentraleinheit 20 übermittelt, wobei die Prozessmetadaten 51 mittels der Zentraleinheit 20 mindestens teilweise durch automatische Analyse der Betriebsdaten 52 erzeugt und auf die Kommunikationsvorrichtung 10 übermittelt werden. Mittels eines dritten Signalisierungskanals 203 können z.B. standardisiert und unabhängig vom Benutzerrequest 11 generierte Strukturdaten 213 von der Zentraleinheit 20 auf das Aggregationsmodul 25 übertragen werden. Die Strukturdaten 213 bilden einen nicht dynamisch bestimmbarer Bestandteil des Metadatenprofils 21. Basierend auf den nicht dynamisch generierten Strukturdaten 213 können z.B. Eigenschaftsparameter von Gruppen und/oder Klassen von Herstellungsprodukten 40 und/oder Prozeßvorrichtungen 31 auf das Aggregationsmodul 25 übertragen werden. Die Strukturdaten 213 können z.B. Gruppen oder-klassen umfassen, Wahrscheinlichkeitsverteilungen innerhalb der Prozessvorrichtungen 31 und/oder Betriebsdaten 52 zuweisen und entsprechende Metadatenprofilmodelle und/oder-Strukturen generiert. Die Gruppen und/oder Klassen können vordefiniert in einer Speichereinheit der Zentraleinheit 20 abgespeichert sein, wobei jedes Herstellungsprodukt 40 einer bestimmten Gruppe und/oder Klasse mittels der Zentraleinheit 20 zugeordnet wird. Für jede Klasse und/oder Gruppe können dann nur eine bestimmte Selektion von Steuersignaldaten 212 im Metadatenprofil 21 selektierbar sein. Die Zentraleinheit 20 kann z.B. basierend auf der zugeordneten Gruppe und/oder Klasse die Steuersignaldaten 212 des Metadatenprofils mittels eines entsprechenden Filtermoduls automatisch generiert.

Wie ebenfalls in Figur 1 gezeigt, können als Ausführungsvariante die Prozessmetadaten 51 mittels eines Repackagingmoduls 22 aus den einem Herstellungsprodukt 40 zugeordneten Prozessmetadaten 51 unter Berücksichtigung der Daten eines Benutzerprofils 221 contentorientiert und benutzerspezifisch optimiert erzeugt werden oder von den erzeugten und aggregierten Prozessmetadaten 51 als benutzerspezifische Metadaten generiert werden. Die contentorientierte und benutzerspezifisch optimierte Prozessmetadaten 51 werden von der Zentraleinheit 20 mittels einer entsprechenden Speichereinheit und Netzwerkinterfache zur Übertragung an die Kommunikationsvorrichtung 10 des Benutzers bereitgestellt. Die Prozessmetadaten 51 und/oder Verweise auf Prozessmetadaten 51 können beispielsweise dem Benutzer in einem Datenspeicher 24 eines Contentmoduls 23 der Zentraleinheit 20 abgespeichert zur Verfügung gestellt werden. Die Zentraleinheit 20 kann z.B. Mittel zum mindestens teilweisen Verwalten der im dem Benutzer 12 zugeordneten Datenspeicher 24 des Contentmoduls 23 abgespeicherten Daten umfassen. Das Benutzerprofil 221 kann z.B. benutzerspezifische Daten zu Netzwerkeigenschaften und/oder Daten zu Hardwareeigenschaften der Kommunikationsvorrichtung 10 des Benutzers 12 und/oder Daten zum Benutzerverhalten umfasst. Vom Benutzerverhalten an der Kommunikationsvorrichtung 10 zum Aggregationsmodul 25 kann also mittels der Benutzerprofils 221 eine Art Feedbackmöglichkeit existieren, mittels welcher der Benutzer 11 die Extraktion bzw. Generierung der Prozessmetadaten 51 direkt beeinflussen kann. Das genannte Benutzerprofil 221 wird anhand von Benutzerinformationen erstellt und in der Zentraleinheit 20 dem Benutzer 12 zugeordnet abgespeichert. Die Zentraleinheit 20 kann in dieser Ausführungsvariante mittels des Repackagingmoduls 22 gemäss dem Benutzerprofil 221 contentorientierte und benutzerspezifisch optimierte Prozessmetadaten 52 generieren und sie an die Kommunikationsvorrichtung 10 des Benutzers 12 übermitteln. Das Benutzerprofil 221 kann z.B. permanent einem bestimmten Benutzer 12 zugeordnet abgespeichert sein oder für jeden Zugriff neu definiert oder von einer entsprechenden Speichereinheit geladen werden.

Die Kommunikationsvorrichtung 10 des Benutzers 12 kann beispielsweise ein PC (Personal Computer), TV, PDA (Personal Digital Assistant) oder ein Mobilfunkgerät sein (insbesondere z.B. in Kombination mit einem Broadcastempfänger). Das Benutzerprofil 221 kann Informationen über einen Benutzer 12 wie z.B. Ort der Kommunikationseinheit 10 des Benutzers im Netzwerk 50, Identität des Benutzers 12, benutzerspezifische Netzwerkeigenschaften, benutzerspezifische Hardwareeigenschaften, Daten zum Benutzerverhalten etc. umfassen. Der Benutzer 12 kann z.B. vorgängig zu einem Bezug von Prozessmetadaten 51 mindestens Teile des Metadatenprofils 21 und/oder der Benutzerprofils 221 festlegen und/oder modifizieren. Natürlich hat er ebenso die Möglichkeit, Prozessmetadaten 51 durch direkten Zugriff, also ohne benutzerspezifische Optimierung mittels des Repackagingmoduls 22 der Zentraleinheit auf die Kommunikationsvorrichtung 10 zu übertragen. Die übrigen Daten des Metadatenprofils 21 und/oder des Benutzerprofils 221 können automatisch durch die Zentraleinheit 20, durch autorisierte Dritte oder ebenfalls vom Benutzer 12 bestimmt sein. Zur Erstellung des Benutzerprofils 221 kann die Zentraleinheit 20 insbesondere z.B. automatische Anschlusserkennung, Benutzeridentifizierung und/oder automatisches Aufzeichnen und Auswerten des Benutzerverhaltens (Zeit des Zugriffs, Häufigkeit des Zugriffs etc.) umfassen. Diese Daten zum Benutzerverhalten können in einer Ausführungsvariante dann wiederum vom Benutzer entsprechend seinen Wünschen modifizierbar sein. In einer Ausführungsmöglichkeit kann das Benutzerprofil 221 eine Kreditlimite umfassen. Die Kreditlimite ist ein vom Benutzer 12 und/oder der Zentraleinheit 20 und/oder autorisierten Dritten (z.B. Banken, Kreditkartengesellschaften, Multimediadatenanbieter etc.) definierbarem Geldbetragswert und legt einen maximalen Geldbetragswert für den Bezug der Prozessmetadaten 21 fest, bis zu welchem Geldbetragswert von der Zentraleinheit 20 ein automatisches Billing für den Bezug von Prozessmetadaten 51 vorgenommen werden kann. Bei Überschreiten der Kreditlimite wird von der Zentraleinheit 20 beispielsweise eine Rückfrage an ein Bankinstitut bezüglich der Kreditwürdigkeit des Benutzers 12 vorgenommen. Die Kreditlimite kann auch dem Benutzer 12 dazu dienen, ihn vor unvorhergesehenen Kosten für den Bezug der Prozessmetadaten 51 zu schützen. Das Handling und Verwalten der Verrechnung (Billing) und/oder der Zugriffsschlüssel werden von der Zentraleinheit 20 ausgeführt. Das Dekodieren und/oder Entschlüsseln der zugriffskontrollierten Prozessmetadaten 51 wird z.B. mittels eines Zugriffskontrollmodul des Repackagingmodul 22 oder der Zentraleinheit 20 erreicht, wobei z.B. Distribution Key und/oder Session Key (Schlüssel) nach dem ETSI-Standard verwendet werden können. Das Repackagingmodul 22 kann gemäss der Erfindung hardwaremässig oder softwaremässig ausgeführt sein. Für das Billing der bezogenen Multimediadaten, d.h. der Verrechnung des Bezugs der Daten, werden entsprechende Verrechnungsdaten von der Zentraleinheit 20 generiert, die z.B. Verrechnungsbelege (z.B. elektronisch signiert) umfassen, ähnlich wie CDR Bolege (Call Data Records) bei sogenannten DUR-Belegen (DAB/DVB Usage Records). Die Verrechnungsbelege werden von der Zentraleinheit 20 z.B. an ein Clearingmodul einer Kreditkartengesellschaft übermittelt, wo sie weiter bearbeitet werden, oder die Zentraleinheit 20 führt die Verrechnung eigenständig durch. Mittels des Repackagingmoduls 22 oder der Zentraleinheit 20 können die standardisierten Prozessmetadaten 51 und/oder die contentorientierten und benutzerspezifisch optimierten Prozessmetadaten auch mit einem elektronischen Stempel, einer elektronische Signatur oder einem elektronischen Wasserzeichen versehen werden. Die elektronische Signatur erlaubt es, die Prozessmetadaten 51 zu einem beliebigen späteren Zeitpunkt dem Benutzer 12 zuzuordnen, welcher sie von der Zentraleinheit 20bezogen hat. Damit kann der Missbrauch von kostenpflichtigen Prozessmetadaten 51 durch den Benutzer verhindert werden. Als zusätzlicher Dienst ist kann z.B. auch angeboten werden, dass auf Verlangen des Benutzers 12 selektierte Prozessmetadaten 51 und/oder der Inhalt oder spezifische (z.B. vom Benutzer bestimmbare) Teile des inhalts der Datenbank 24 des Contentmoduls 23 auf einem physikalischen Medium, wie z.B. CD-Rom oder DVD, gespeichert werden und dem Benutzer, z.B. via Post, zugestellt werden. Es muss jedoch darauf hingewiesen werden, dass das Verfahren durch die hier erwähnten Beispiele in seinem Schutzumfang in keiner Weise als eingeschränkt betrachtet werden darf.

### Liste der Bezugszeichen

- 10: Kommunikationsvorrichtung
- 11: Benutzerrequest
- 12: Benutzer
- 20: Zentraleinheit
- 201: Erster Signalisierungskanal
- 202: Zweiter Signalisierungskanal
- 203: Dritter Signalisierungskanal
- 21: Metadatenprofil
- 211: Authentisierungs- und/oder Autorisierungsdaten
- 212: Dynamisch generierte Steuersignaldaten
- 213: Nicht dynamisch bestimmbare Strukturdaten
- 22: Repackagingmodul
- 221: Benutzerprofil
- 23: Contentmodul
- 24: Datenbank
- 25: Aggregationsmodul
- 251: Sensorikinterface
- 30: Herstellungsprozesskette
- 301: Start des Herstellungsprozesses
- 302: Ende des Herstellungsprozesses
- 31: Prozeßvorrichtungen
- 311: Sensorik
- 40: Herstellungsprodukt
- 50: Kommunikationsnetz
- 51: Prozessmetadaten
- 52: Betriebsdaten
- 53: Metadatenextraktionsmodul

## Patentansprüche

1. Verfahren zur Aggregation und Übermittlung von Prozessmetadaten heterogener Herstellungsprozessketten (30), wobei jede Prozesskette (30) eine Vielzahl von im Herstellungsprozess eines Herstellungsproduktes (40) mitwirkenden Prozessvorrichtungen (31) umfasst und mittels dezentralisiert bei den Herstellungsprozessketten (30) angeordneten Aggregationsmodulen (25) einer Zentraleinheit (20) auf die Prozessvorrichtungen (31) einer Herstellungsprozesskette (30) zugegriffen wird, bei welchem Verfahren herstellungsprozessketten-spezifische Betriebsdaten (52) von Herstellungsprozessketten (30) auf einem Benutzerrequest (11) einer Kommunikationsvorrichtung (10) erfaßt und Prozessmetadaten (52) auf eine Kommunikationsvorrichtung (10) eines Benutzers (12) übermittelt werden, **dadurch gekennzeichnet,**
**dass** für den Zugriff mittels der Zentraleinheit (20) eine Herstellungsprozesskette (30) selektiert und ein Metadatenprofil (21) basierend auf dem Benutzerrequest (11) mindestens teilweise dynamisch generiert wird, welche dynamisch generierten Teile (212) des Metadatenprofil (21) standardisierte Steuersignaldaten für die Zugriffe des Aggregationsmoduls (25) auf die Herstellungsprozesskette (30) umfassen,
**dass** mittels eines ersten Signalisierungskanals (201) Authentisierungsdaten (211) des Metadatenprofils (21) eines Herstellungsprodukt (40) von der Zentraleinheit (20) auf ein Aggregationsmodul (25) übertragen werden, wobei mittels des Aggregationsmoduls (25) das entsprechende Herstellungsprodukt (40) in der Herstellungsprozeßkette (30) lokalisiert und authentisiert wird,
**dass** mittels eines zweiten Signalisierungskanals (202) die dynamisch generierten Steuersignaldaten (212) des Metadatenprofils (21) von der Zentraleinheit (20) auf das Aggregationsmodul (25) übertragen werden, wobei basierend auf den Steuersignaldaten (212) mittels des Aggregationsmodul (25) auf die Herstellungsprozesskette (30) zugegriffen wird und herstellungsprozessketten-spezifische Betriebsdaten (52) des Herstellungsproduktes (40) erfasst werden, und
**dass** die erfassten Betriebsdaten (52) vom Aggregationsmodul (25) auf die Zentraleinheit (20) übertragen werden, wobei mittels der Zentraleinheit (20) entsprechende Prozessmetadaten mindestens teilweise durch automatische Analyse der Betriebsdaten (52) erzeugt werden und auf die Kommunikationsvorrichtung (10) übermittelt werden.

2. Verfahren nach Anspruch 1, **dadurch gekennzeichnet, dass** mittels eines dritten Signalisierungskanals (203) nicht dynamisch bestimmbare Strukturdaten (213) von der Zentraleinheit (20) als Teil des Metadatenprofils (21) unabhängig vom Benutzerrequest (11) generiert werden, wobei basierend auf den nicht dynamisch generierten Strukturdaten (213) Eigenschaftsparameter von Gruppen und/oder Klassen von Herstellungsprodukten (40) und/oder Prozeßvorrichtungen (31) auf das Aggregationsmodul (25) übertragen werden.

3. Verfahren nach Anspruch 2, **dadurch gekennzeichnet, dass** die Gruppen und Klassen vordefiniert in einer Speichereinheit abgespeichert werden, wobei jedes Herstellungsprodukt (40) einer bestimmten Gruppe und/oder Klasse zugeordnet wird und wobei für jede Klasse und/oder Gruppe nur eine bestimmte Selektion von Steuersignaldaten (212) im Metadatenprofil (21) selektiert werden kann.

4. Verfahren nach einem der Ansprüche 2 oder 3, **dadurch gekennzeichnet, dass** die Zentraleinheit (20) basierend auf der Zugeordneten Gruppe und/oder Klasse die Steuersignaldaten (212) des Metadatenprofils automatisch generiert.

5. Verfahren nach einem der Ansprüche 1 bis 4, **dadurch gekennzeichnet, dass** die Herstellungsprodukte (40) einer Herstellungsprozeßkette (30) mittels des zugeordneten Aggregationsmoduls (25) automatisch mit einem elektronischen Authentisierungslabel versehen werden.

6. Verfahren nach einem der Ansprüche 1 bis 5, **dadurch gekennzeichnet, daß** das selektierte Herstellungsprodukt (40) vom Benutzer (12) im mittels der Kommunikationsvorrichtung (10) generierten Benutzerrequest (11) bestimmt wird.

7. Verfahren nach einem der Ansprüche 1 bis 5, **dadurch gekennzeichnet, daß** der dynamische Teil (212) des Metadatenprofil (21) für den Durchgang eines Herstellungsproduktes (40) in der Herstellungsprozeßkette (30) mittels der Zentraleinheit (20) automatisch bestimmt wird.

8. Verfahren nach einem der Ansprüche 1 bis 7, **dadurch gekennzeichnet, dass** der dynamisch bestimmte Teil (212) des Metadatenprofils (52) mit den Steuersignaldaten Programme und/oder programmbegleitende Daten umfassen.

9. Verfahren nach einem der Ansprüche 1 bis 8, **dadurch gekennzeichnet, daß** die Zentraleinheit (20) eine Lookup-Table mit standardisiert abgespeicherten Steuersignaldaten umfaßt, wobei der dynamische Teil (212) des Metadatenprofils (21) basierend auf den in der Lookup-Table abgespeicherten Steuersignaldaten generiert wird.

10. Verfahren nach einem der Ansprüche 1 bis 9, **dadurch gekennzeichnet, daß** die Betriebsdaten (52) Multimediadaten und/oder Verweise auf Multimediadaten umfassen.

11. Verfahren nach einem der Ansprüche 1 bis 10, **dadurch gekennzeichnet, daß** aus den einem Herstellungsprodukt (40) zugeordneten Prozessmetadaten mittels eines Repackagingmoduls (22) unter Berücksichtigung der Daten eines Benutzerprofils (221) die Prozessmetadaten (51) contentorientiert und benutzerspezifisch optimiert erzeugt werden, welche contentorientierte und benutzerspezifisch optimierte Prozessmetadaten von der Zentraleinheit (20) an die Kommunikationsvorrichtung (10) des Benutzers (12) übermittelt werden.

12. Verfahren nach einem der Ansprüche 1 bis 11, **dadurch gekennzeichnet, dass** die Prozessmetadaten und/oder Verweise auf Prozessmetadaten dem Benutzer (12) in einem Datenspeicher (23) eines Contentmoduls (22) der Zentraleinheit (20) abgespeichert zur Verfügung gestellt werden.

13. Verfahren nach Anspruch 12, **dadurch gekennzeichnet, dass** der Benutzer (12) die im dem Benutzer (12) zugeordneten Datenspeicher (24) des Contentmoduls (23) abgespeicherten Daten mindestens teilweise selber verwaltet.

14. System zur Aggregation und Übermittlung von Prozessmetadaten heterogener Herstellungsprozessketten (30), wobei jede Prozesskette (30) eine Vielzahl von im Herstellungsprozess eines Hers-tellungsproduktes (40) mitwirkenden Prozessvorrichtungen (31), dezentralisiert bei den Herstellungsprozessketten (30) angeordnete Aggregationsmodule (25) einer Zentraleinheit (20) zum Zugreifen auf die Prozessvorrichtungen (31) der Herstellungsprozesskette (30) umfasst, eine Sensorik (311) zum Erfassen von herstellungsprozessketten-spezifischen Betriebsdaten (52) von Herstellungsprozessketten (30) und zum Generieren von den Betriebsdaten (52) zugeordneten Prozessmetadaten umfasst, und ein Interfacemodul zum Übermitteln der prozessmetadaten an eine Kommunikationsvorrichtung (10) eines Benutzers (12) umfasst, **dadurch gekennzeichnet,**
**dass** zum Zugreifen auf die Prozessvorrichtungen (31) mittels der Zentraleinheit (20) eine Herstellungsprozesskette (30) selektierbar ist und ein Metadatenprofil (21) für den Zugriff mittels der Zentraleinheit (20) basierend auf einem Benutzerrequest (11) der Kommunikationsvorrichtung (10) mindestens teilweise dynamisch generierbar ist, welche dynamisch generierten Teile des Metadatenprofil (21) standardisierte Steuersignaldaten (212) für die Zugriffe des Aggregationsmoduls (25) auf die Herstellungsprozesskette (30) umfassen,
**dass** mittels eines ersten Signalisierungskanals (201) Authentisierungsdaten (211) eines Herstellungsprodukts (40) von der Zentraleinheit (20) auf das Aggregationsmodul (25) übertragbar sind, wobei mittels des Aggregationsmoduls (25) das entsprechende Herstellungsprodukt (40) in der Herstellungsprozesskette lokalisierbar und authentisierbar ist,
**dass** mittels eines zweiten Signalisierungskanals (202) die Steuersignaldaten (212) des Metadatenprofils (21) von der Zentraleinheit (20) auf das Aggregationsmodul (25) übertragbar sind, wobei das Aggregationsmodul (25) Mittel zum dynamischen Zugreifen basierend auf den Steuersignaldaten (212) auf die Herstellungsprozesskette umfasst und wobei das Aggregationsmodul (25) Sensorikinterfaces (251) zum Zugreifen auf die Sensorik (311) der Prozessvorrichtung (31) umfasst, und
**dass** die erfassten Betriebsdaten (52) der HJerstellungsproduktes (40) vom Aggregationsmodul (25) auf die Zentraleinheit (20) übermittelbar sind, wobei die Prozessmetadaten mittels der Zentraleinheit (20) mindestens teilweise durch automatische Analyse der Betriebsdaten (52) erzeugbar und auf die Kommunikationsvorrichtung (10) übermittelbar sind.

15. System nach Anspruch 14, **dadurch gekennzeichnet, daß** das Herstellungsprodukt (40) ein mittels des Aggregationsmoduls (25) automatisch zugeordnetes elektronisches Authentisierungslabel umfasst.

16. System nach einem der Ansprüche 14 oder 15, **dadurch gekennzeichnet, daß** der vom Benutzer (12) mittels der Kommunikationsvorrichtung (10) generierte Benutzerrequest (11) Angaben zur Identifikation und/oder Authentifikation eines bestimmten Herstellungsproduktes (40) umfasst.

17. System nach einem der Ansprüche 14 bis 16, **dadurch gekennzeichnet, daß** der dynamische Teil (212) des Metadatenprofil (21) für den Durchgang eines Herstellungsprodukt (40) mittels der Zentraleinheit automatisch bestimmbar ist.

18. System nach einem der Ansprüche 14 bis 17, **dadurch gekennzeichnet, daß** die Zentraleinheit (20) eine Lookup-Table mit standardisiert abgespeicherten Steuersignaldaten (212) umfasst, wobei der dynamische Teil (212) des Metadatenprofils (21) basierend auf den in der Lookup-Table abgespeicherten Steuersignaldaten generiert ist.

19. System nach einem der Ansprüche 14 bis 18, **dadurch gekennzeichnet, daß** aus den einem Herstellungsprodukt (40) zugeordneten Prozessmetadaten mittels eines Repackagingmoduls (22) unter Berücksichtigung der Daten eines Benutzerprofils (221) die Prozessmetadaten contentorientiert und benutzerspezifisch optimiert erzeugbar sind, welche contentorientierte und benutzerspezifisch optimierte Prozessmetadaten von der Zentraleinheit (20) mittels einer entsprechenden
Speichereinheit und Netzwerkinterfache zur Übertragung an die Kommunikationsvorrichtung (10) des Benutzers bereitgestellt sind.

20. System nach einem der Ansprüche 14 bis 19, **dadurch gekennzeichnet, dass** die Prozessmetadaten und/oder Verweise auf Prozessmetadaten dem Benutzer in einem Datenspeicher (24) eines Contentmoduls (23) der Zentraleinheit (20) abgespeichert zur Verfügung gestellt sind.

## Claims

1. Method for aggregating and transferring process metadata of heterogeneous production process chains (30), wherein each process chain (30) includes multiple process devices (31) which co-operate in the production process of a production product (40), and the process devices (31) of a production process chain (30) are accessed by means of aggregation modules (25) of a central unit (20), said aggregation modules (25) being arranged in a decentralised manner in the case of the production process chains (30), in which method production-process-chain-specific operating data (52) of production process chains (30) are captured on a user request (11) of a communication device (10), and process metadata (52) are transferred to a communication device (10) of a user (12), **characterized**
**in that** for access by means of the central unit (20), a production process chain (30) is selected, and a metadata profile (21) is generated at least partly dynamically on the basis of the user request (11), said dynamically generated parts (212) of the metadata profile (21) including standardised control signal data for the accesses of the aggregation module (25) to the production process chain (30),
**in that** by means of a first signalling channel (201), authentication data (211) of the metadata profile (21) of a production product (40) are transmitted by the central unit (20) to an aggregation module (25), the corresponding production product (40) being located and authenticated in the production process chain (30) by means of the aggregation module (25),
**in that** by means of a second signalling channel (202), the dynamically generated control signal data (212) of the metadata profile (21) are transmitted by the central unit (20) to an aggregation module (25), the production process chain (30) being accessed by means of the aggregation module (25) on the basis of the control signal data (212), and production-process-chain-specific operating data (52) of the production product (40) being captured, and
**in that** the captured operating data (52) are transmitted by the aggregation module (25) to the central unit (20), corresponding process metadata being at least partly generated by automatic analysis of the operating data (52), and transmitted to the communication device (10), by means of the central unit (20).

2. Method according to Claim 1, **characterized in that** by means of a third signalling channel (203), structure data (213) which cannot be dynamically determined are generated by the central unit (20) as part of the metadata profile (21) independently of the user request (11), property parameters of groups and/or classes of production products (40) and/or process devices (31) being transmitted to the aggregation module (25) on the basis of the structure data (213) which is not dynamically determined.

3. Method according to Claim 2, **characterized in that** the groups and classes are stored in a predefined manner in a memory unit, each production product (40) being assigned to a specified group and/or class, and for each class and/or group, it being possible to select only a specified selection of control signal data (212) in the metadata profile (21).

4. Method according to one of Claims 2 or 3, **characterized in that** the central unit (20) automatically generates the control signal data (212) of the metadata profile on the basis of the assigned group and/or class.

5. Method according to any one of Claims 1 to 4, **characterized in that** the production products (40) of a production process chain (30) are automatically provided with an electronic authentication label by means of the assigned aggregation module (25).

6. Method according to any one of Claims 1 to 5, **characterized in that** the selected production product (40) is specified by the user (12) in the user request (11) which is generated by means of the communication device (10).

7. Method according to any one of Claims 1 to 5, **characterized in that** the dynamic part (212) of the metadata profile (21) for the passage of a production product (40) in the production process chain (30) is determined automatically by means of the central unit (20).

8. Method according to any one of Claims 1 to 7, **characterized in that** the dynamically determined part (212) of the metadata profile (52) includes programs and/or data accompanying programs with the control signal data.

9. Method according to any one of Claims 1 to 8, **characterized in that** the central unit (20) includes a lookup table with control signal data stored in a standardised manner, the dynamic part (212) of the metadata profile (21) being generated on the basis of the control signal data stored in the lookup table.

10. Method according to any one of Claims 1 to 9, **characterized in that** the operating data (52) include multimedia data and/or pointers to multimedia data.

11. Method according to any one of Claims 1 to 10, **characterized in that** from the process metadata assigned to a production product (40), by means of a repackaging module (22) and taking account of the data of a user profile (221), the process metadata (51) are generated in a content-oriented and user-specifically optimised manner, said content-oriented and user-specifically optimised process metadata being transmitted by the central unit (20) to the communication device (10) of the user (12).

12. Method according to any one of Claims 1 to 11, **characterized in that** the process metadata and/or pointers to process metadata are stored and made available to the user (12) in a data memory (23) of a content module (22) of the central unit (20).

13. Method according to Claim 12, **characterized in that** the user (12) himself or herself at least partly administers the data stored in the data memory (24), which is assigned to the user (12), of the content module (23).

14. System for aggregating and transferring process metadata of heterogeneous production process chains (30), wherein each process chain (30) includes multiple process devices (31) which co-operate in the production process of a production product (40), and aggregation modules (25) of a central unit (20) for accessing the process devices (31) of the production process chain (30), said aggregation modules (25) being arranged in a decentralised manner in the case of the production process chains (30), and sensors (311) for capturing production-process-chain-specific operating data (52) of production process chains (30) and for generating process metadata assigned to the operating data (52), and an interface module for transmitting the process metadata to a communication device (10) of a user (12), **characterized**
**in that** for access to the processing devices (31) by means of the central unit (20), a production process chain (30) can be selected, and a metadata profile (21) for access by means of the central unit (20) can be generated at least partly dynamically on the basis of a user request (11) of the communication device (10), said dynamically generated parts of the metadata profile (21) including standardised control signal data (212) for the accesses of the aggregation module (25) to the production process chain (30),
**in that** by means of a first signalling channel (201), authentication data (211) of a production product (40) can be transmitted by the central unit (20) to the aggregation module (25), it being possible to locate and authenticate the corresponding production product (40) in the production process chain by means of the aggregation module (25),
**in that** by means of a second signalling channel (202), the control signal data (212) of the metadata profile (21) can be transmitted by the central unit (20) to the aggregation module (25), the aggregation module (25) including means for dynamic access to the production process chain on the basis of the control signal data (212), and the aggregation module (25) including sensor interfaces (251) for accessing the sensors (311) of the process device (31), and
**in that** the captured operating data (52) of the production product (40) can be transmitted by the aggregation module (25) to the central unit (20), it being possible to generate the process metadata at least partly by automatic analysis of the operating data (52), and to transmit it to the communication device (10), by means of the central unit (20).

15. System according to Claim 14, **characterized in that** the production product (40) includes an electronic authentication label which is automatically assigned by means of the aggregation module (25).

16. System according to one of Claims 14 or 15, **characterized in that** the user request (11) which the user (12) generates by means of the communication device (10) includes data for identifying and/or authenticating a specified production product (40).

17. System according to any one of Claims 14 to 16, **characterized in that** the dynamic part (212) of the metadata profile (21) for the passage of a production product (40) can be automatically determined by means of the central unit.

18. System according to any one of Claims 14 to 17, **characterized in that** the central unit (20) includes a lookup table with control signal data (212) stored in a standardised manner, the dynamic part (212) of the metadata profile (21) being generated on the basis of the control signal data stored in the lookup table.

19. System according to any one of Claims 14 to 18, **characterized in that** from the process metadata assigned to a production product (40), by means of a repackaging module (22) and taking account of the data of a user profile (221), the process metadata can be generated in a content-oriented and user-specifically optimised manner, said content-oriented and user-specifically optimised process metadata being provided by the central unit (20), by means of a corresponding memory unit and network interface, for transmission to the communication device (10) of the user.

20. System according to any one of Claims 14 to 19, **characterized in that** the process metadata and/or pointers to process metadata are stored and made available to the user in a data memory (24) of a content module (23) of the central unit (20).

## Revendications

1. Procédé d'agrégation et de transmission de métadonnées de processus de chaînes de processus de fabrication hétérogènes (30), où chaque chaîne de processus (30) comprend une pluralité de dispositifs de processus (31) qui participent au processus de fabrication d'un produit de fabrication (40) et où l'on accède aux dispositifs de processus (31) d'une chaîne de processus de fabrication (30) au moyen de modules d'agrégation (25) d'une unité centrale (20) qui sont disposés de manière décentralisée près des chaînes de processus de fabrication (30), où le procédé saisit des données de fonctionnement (52) spécifiques aux chaînes de processus de fabrication des chaînes de processus de fabrication (30) sur une demande de l'utilisateur (11) d'un dispositif de communication (10) et des métadonnées de processus (52) sont transmises à un dispositif de communication (10) d'un utilisateur (12), **caractérisé en ce que**
pour l'accès au moyen de l'unité centrale (20) est sélectionnée une chaîne de processus de fabrication (30) et un profil de métadonnées (21) est généré au moins partiellement de manière dynamique en se basant sur la demande de l'utilisateur (11), où les parties (212) du profil des métadonnées (21) générées de manière dynamique comprennent des données de signal de commande standardisées pour les accès du module d'agrégation (25) à la chaîne de processus de fabrication (30),
au moyen d'un premier canal de signalisation (201) des données d'authentification (211) du profil des métadonnées (21) d'un produit de fabrication (40) sont transférées de l'unité centrale (20) à un module d'agrégation (25), où le produit de fabrication (40) correspondant est localisé et authentifié dans la chaîne de processus de fabrication (30) au moyen du module d'agrégation (25),
au moyen d'un deuxième canal de signalisation (202) les données de signal de commande (212) du profil des métadonnées (21) générées de manière dynamique sont transférées de l'unité centrale (20) au module d'agrégation (25), où l'on accède à la chaîne de processus de fabrication (30) au moyen du module d'agrégation (25) en se basant sur les données de signal de commande (212) et des données de fonctionnement (52) du produit de fabrication (40) spécifiques à la chaîne de processus de fabrication sont saisies, et
les données de fonctionnement (52) saisies sont transférées du module d'agrégation (25) à l'unité centrale (20), où au moyen de l'unité centrale (20) des métadonnées de processus correspondantes sont générées au moins partiellement par l'analyse automatique des données de fonctionnement (52) et sont transmises au dispositif de communication (10).

2. Procédé selon la revendication 1, **caractérisé en ce qu'**au moyen d'un troisième canal de signalisation (203) sont générées des données de structure (213) non déterminables de manière dynamique de l'unité centrale (20) en tant que partie du profil des métadonnées (21) indépendamment de la demande de l'utilisateur (11) où, en se basant sur les données de structure (213) générées de manière non dynamique, des paramètres de propriété de groupes et/ou de classes de produits de fabrication (40) et/ou de dispositifs de processus (31) sont transférés sur le module d'agrégation (25).

3. Procédé selon la revendication 2, **caractérisé en ce que** les groupes et les classes sont sauvegardés de manière prédéfinie dans une unité de sauvegarde, où chaque produit de fabrication (40) est affecté à un certain groupe et/ou une certaine classe et où pour chaque classe et/ou groupe seulement une sélection définie de données de signal de commande (212) peut être sélectionnée dans le profil des métadonnées (21).

4. Procédé selon l'une quelconque des revendications 2 ou 3, **caractérisé en ce que** l'unité centrale (20) génère automatiquement les données de signal de commande (212) du profil des métadonnées en se basant sur le groupe et/ou la classe attribués.

5. Procédé selon l'une quelconque des revendications 1 à 4, **caractérisé en ce que** les produits de fabrication (40) d'une chaîne de processus de fabrication (30) sont munis automatiquement avec un label d'authentification électronique au moyen du module d'agrégation (25) attribué.

6. Procédé selon l'une quelconque des revendications 1 à 5, **caractérisé en ce que** le produit de fabrication sélectionné (40) est défini par l'utilisateur (12) dans la demande de l'utilisateur (11) générée au moyen du dispositif de communication (10).

7. Procédé selon l'une quelconque des revendications 1 à 5, **caractérisé en ce que** la partie dynamique (212) du profil des métadonnées (21) pour le passage d'un produit de fabrication (40) dans la chaîne de processus de fabrication (30) est déterminée de manière automatique au moyen de l'unité centrale (20).

8. Procédé selon l'une quelconque des revendications 1 à 7, **caractérisé en ce que** la partie (212) du profil des métadonnées (52) déterminée de manière dynamique avec les données de signal de commande comprennent des programmes et/ ou des données accompagnant le programme.

9. Procédé selon l'une quelconque des revendications 1 à 8, **caractérisé en ce que** l'unité centrale (20) comprend une table de correspondance avec des données de signal de commande sauvegardées de manière standardisée, où la partie dynamique (212) du profil des métadonnées (21) est générée en se basant sur les données de signal de commande sauvegardées dans la table de correspondance.

10. Procédé selon l'une quelconque des revendications 1 à 9, **caractérisé en ce que** les données de fonctionnement (52) comprennent des données multimédias et/ ou des liens vers des données multimédias.

11. Procédé selon l'une quelconque des revendications 1 à 10, **caractérisé en ce qu'**à partir des métadonnées de processus attribuées à un produit de fabrication (40) sont générées au moyen d'un module de reconditionnement (22), en tenant compte des données d'un profil d'utilisateur (221), les métadonnées de processus (51) de manière optimisée orientées contenu et spécifiques à l'utilisateur, où les métadonnées de processus optimisées orientées contenu et spécifiques à l'utilisateur sont transmises de l'unité centrale (20) au dispositif de communication (10) de l'utilisateur (12).

12. Procédé selon l'une quelconque des revendications 1 à 11, **caractérisé en ce que** les métadonnées de processus et/ ou les liens vers les métadonnées de processus de l'utilisateur (12) sont mis à disposition sauvegardés dans une mémoire de données (23) d'un module de gestion de contenu (22) de l'unité centrale (20).

13. Procédé selon la revendication 12, **caractérisé en ce que** l'utilisateur (12) gère les données sauvegardées dans la mémoire de données (24) du module de gestion de contenu (23) affecté à l'utilisateur (12) au moins partiellement lui-même.

14. Système d'agrégation et de transmission de métadonnées de processus de chaînes de processus de fabrication hétérogènes (30), où chaque chaîne de processus (30) comprend une pluralité de dispositifs de processus (31) qui participent au processus de fabrication d'un produit de fabrication (40), des modules d'agrégation (25) d'une unité centrale (20) qui sont disposés de manière décentralisée près des chaînes de processus de fabrication (30) pour l'accès aux dispositifs de processus (31) de la chaîne de processus de fabrication (30), comprenant une technique sensorielle (311) pour la saisie de données de fonctionnement spécifiques aux chaînes de processus de fabrication (52) des chaînes de processus de fabrication (30) et pour la génération de métadonnées de processus attribuées aux données de fonctionnement (52), et un module d'interface pour la transmission des métadonnées de processus à un dispositif de communication (10) d'un utilisateur (12), **caractérisé en ce que**
pour l'accès aux dispositifs de communication (31) au moyen de l'unité centrale (20) une chaîne de processus de fabrication (30) peut être sélectionnée et un profil des métadonnées (21) peut être généré pour l'accès au moyen de l'unité centrale (20) en se basant sur une demande de l'utilisateur (11) du dispositif de communication (10) au moins partiellement de manière dynamique, où les parties du profil des métadonnées (21) générées de manière dynamique comprennent des données de signal de commande standardisées (212) pour les accès du module d'agrégation (25) à la chaîne de processus de fabrication (30),
au moyen d'un premier canal de signalisation (201) des données d'authentification (211) d'un produit de fabrication (40) peuvent être transférées de l'unité centrale (20) au module d'agrégation (25), où le produit de fabrication (40) correspondant peut être localisé et authentifié dans la chaîne de processus de fabrication au moyen du module d'agrégation (25),
au moyen d'un deuxième canal de signalisation (202) les données de signal de commande (212) du profil des métadonnées (21) peuvent être transférées de l'unité centrale (20) au module d'agrégation (25), où le module d'agrégation (25) comprend des moyens pour l'accès dynamique à la chaîne de processus de fabrication en se basant sur les données de signal de commande (212) et où le module d'agrégation (25) comprend des interfaces de technique sensorielle (251) pour l'accès à la technique sensorielle (311) du dispositif de processus (31), et
les données de fonctionnement (52) du produit de fabrication (40) saisies peuvent être transmises du module d'agrégation (25) à l'unité centrale (20), où au moyen de l'unité centrale (20) les métadonnées de processus peuvent être générées au moins partiellement par l'analyse automatique des données de fonctionnement (52) et peuvent être transmises au dispositif de communication (10).

15. Système selon la revendication 14, **caractérisé en ce que** le produit de fabrication (40) comprend un label d'authentification électronique attribué de manière automatique au moyen du module d'agrégation (25).

16. Système selon l'une quelconque des revendications 14 ou 15, **caractérisé en ce que** la demande de l'utilisateur (11) générée par l'utilisateur (12) au moyen du dispositif de communication (10) comprend des informations pour l'identification et/ou l'authentification d'un certain produit de fabrication (40).

17. Système selon l'une quelconque des revendications 14 à 16, **caractérisé en ce que** la partie dynamique (212) du profil des métadonnées (21) pour le passage d'un produit de fabrication (40) peut être déterminée de manière automatique au moyen de l'unité centrale.

18. Système selon l'une quelconque des revendications 14 à 17, **caractérisé en ce que** l'unité centrale (20) comprend une table de correspondance avec des données de signal de commande (212) sauvegardées de manière standardisée, où la partie dynamique (212) du profil des métadonnées (21) est générée en se basant sur les données de signal de commande sauvegardées dans une table de correspondance.

19. Système selon l'une quelconque des revendications 14 à 18, **caractérisé en ce qu'**à partir des métadonnées de processus affectées à un produit de fabrication (40) au moyen d'un module de reconditionnement (22) en tenant compte des données d'un profil d'utilisateur (221), les métadonnées de processus peuvent être générées de manière optimisée orientées contenu et spécifiques à l'utilisateur, où les métadonnées de processus optimisées orientées contenu et spécifiques à l'utilisateur sont mises à disposition pour la transmission de l'unité centrale (20) au dispositif de communication (10) de l'utilisateur (12) au moyen d'une unité de sauvegarde correspondante et des interfaces réseau.

20. Système selon l'une quelconque des revendications 14 à 19, **caractérisé en ce que** les métadonnées de processus et/ou les liens vers les métadonnées de processus sont mis à disposition de l'utilisateur sauvegardés dans une mémoire de données (24) d'un module de gestion de contenu (23) de l'unité centrale (20).
